# EUROPEAN PATENT APPLICATION

(11) **EP 4 831 798 A1**
(43) Date of publication of application: **28.10.2026**
(21) Application number: 26174093.0
(22) Date of filing: 22.04.2026
(51) Int. Cl.: G06F 9/30, G06F 9/38

(54) **A METHOD AND AN APPARATUS FOR AN EFFICIENT TAG FORWARDING FOR MEMORY POINTER INCREMENT IN A CHERI ENABLED CPU**

(30) Priority: 23.04.2025 US 202519187391
(71) Applicant: Codasip s.r.o, 602 00 Brno (CZ)
(72) Inventor: Kurd, Tariq, Bishopston, Bristol, BS7 8JE (GB)
(74) Representative: Beck Greener LLP

(57) **Abstract**

A method and a system embodying the method for an efficient capability verification tag forwarding for a Capability Hardware Enhanced RISC Instructions (CHERI) enabled Central Processing Unit, comprising: executing an instruction manipulating an address of a source capability resulting in a destination capability in a first clock cycle; speculatively forwarding the capability verification tag of the destination capability in the first clock cycle; verifying an integrity of the destination capability's address in a second clock cycle; starting execution of a second instruction in the second clock cycle in parallel with the verifying; and reevaluating the status of the speculatively forwarded the capability verification tag in response to the verifying is disclosed.

## Description

### BACKGROUND

### 1. Field

The present invention relates to processor design. More particularly, this invention is directed toward an efficient hardware tag forwarding method and apparatus for memory pointer incrementing in a Capability Hardware Enhanced RISC Instructions (CHERI) enabled Central Processing Unit (CPU).

### 2. Description of Related Technology

The design of memory safety in the mainstream processors' CPU is prone to security problems, either *via* errors in code written in memory-unsafe programming languages such as C and C++ or even in code written in memory-safe programming languages such as Rust since not all memory safety vulnerabilities can be detected by the compiler. Other security problems stem from exploit attempts, e.g., targeting buffer overruns, Return-oriented-programming (ROP), jump-oriented programming (JOP), and other exploit attempts known to a person of ordinary skill in the art.

Instructions executed on a CPU uses integer numbers as pointers, consequently manipulating a pointer is typically accomplished by simple mathematical operations on the pointer and optionally another integer representing an offset. A pointer to any addressable memory to be accessed can be manipulated in any manner, limited only by the programming language or the Instruction Set Architecture. By means of an example the C and C++ languages allow mathematical operations on a pointer to be multiplication by a value, division by a value, subtraction of a value from the pointer, addition of a value to the pointer and other operations known to a person of ordinary skill in the art. Even considering memory-safe programming languages, not all memory safety vulnerabilities can be detected.

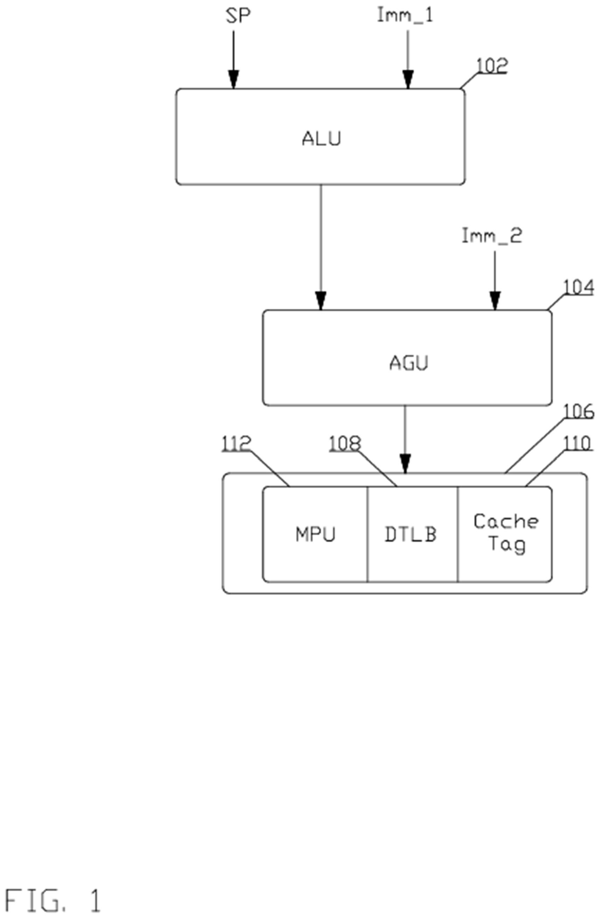

Referring to **FIG. 1****,** which illustrates a typical scenario when accessing memory. A program's instruction **102,** being executed by a Central Processing Unit (CPU) (not shown), causes the CPU to fetch a stack pointer **104** (SP), *i.e.,* a pointer storing a memory address of the topmost element in the stack frame held in a register, together with at least one parameter **106,** *i.e.,* value(s) by which to adjust the SP **104** by on stack frame allocation or deallocation provided by a currently executing program. The SP **104** and the at least one parameter **106** are provided to the arithmetic logic unit (ALU) **108,** which performs addition of the SP **104** and the at least one parameter **106,** yielding a destination stack pointer **108** (DSP). As depicted for the purposes of the explanation, the DSP **108** stores a virtual address and the result of the addition may also be referred to as a destination virtual address. The ALU **108** then provides the destination virtual address together with an offset **112,** which specifies the offset between the destination virtual address and the actual load/store address to access within the stack frame provided by the currently executing program, to the address generation unit (AGU) **114.** Such offset **112** can be fetched by the CPU from a register, or be represented by an Incremental Immediate field (Imm) encoded within the instruction **102.** This processing is usually implemented in a single clock cycle.

Upon receiving the destination virtual address, the AGU **114** calculates the load or store (L/S) virtual address, and provides the load/store virtual address to a load/store unit (LSU) **116.** Although the AGU **114** and the LSU **116** are depicted as separate units, such a configuration is implementation dependent, thus in some implementations the AGU **114** and the LSU **116** constitute a single unit. This processing is usually implemented in a single clock cycle.

The LSU **116** comprises a Data Translation Lookaside Buffer (DTLB) **118,** a cache tag (CT) **120** buffer, and a memory protection unit (MPU) **122.** The DTLB **108** comprises a translation buffer that stores the recent translations, *i.e.,* virtual to physical mappings for the upper address bits, permissions, *e.g.,* read/write/execute, and attributes, as a series of entries. The CT **120** stores the upper virtual and physical address bits of all lines in the cache, the valid bit to show if the entry is valid, and the dirty bit to show whether the cache line has been written to and so must be written back to main memory if evicted. The MPU **122** contains information of the physical memory/memories existing in the system, *e.g.,* cached memory, device memory, and other memories known to a person of ordinary skill in the art, and definition of a finite number of ranges which can be individually configured to enforce access permissions to a range of addresses of the physical memory in the system.

Upon receiving the virtual address, the LSU **116** performs checks on the virtual address according to the permissions, and should the additional checks succeed, translates the provided virtual memory address to the physical memory address. The DTLB **118** then returns the physical address, the CT **120** returns information whether the line hit in the cache, and should there have been a hit, either the virtual or physical address addresses the data in one or more random address memories (RAMs) (not shown), which return the data. Should there have been a DTLB **118** miss, a secondary page table (not shown) is typically accessed to look up the corresponding page, and if that also misses then a page-table walk is required.

Should the additional checks fail, the DTLB **118** generates an exception for further processing (not shown). The CPU invokes an exception handler and aborts the currently executing program.

Based on the foregoing, a memory address corruption or exploit may happen whenever an instruction executed by a program accidentally or maliciously overwrites or overreads a memory to which the program should have no access.

Consequently, improvements in memory safety became desirable. One such improvement effort resulted in a Capability Hardware Enhanced RISC Instructions (CHERI) project, a joint research project of SRI International and the University of Cambridge, revisiting fundamental design choices in hardware and software to dramatically improve system security. CHERI extends conventional hardware Instruction-Set Architectures (ISAs) with new architectural features to enable fine-grained memory protection and highly scalable software compartmentalization.

Although the term CHERI, indicates a RISC CPU architecture specification, there is also a CHERI RISC-V proposed standard for CPU architecture (current version 0.9.5), and even a version for a Complex Instruction Set Computers (CISC) CPU architecture. Therefore, any reference to a CHERI extension to the CPU architecture is meant to indicate any such CHERI specification or standard requiring a verification of an address created by a specialized instruction.

The CHERI extension to the CPU supports extra memory security features, most notably *via* "capabilities", *i.e.,* bit structures, containing all the information required to identify and authorize access to a region of memory, either virtual or physical, that can help to identify and prevent flaws such as the above-mentioned errors in code, buffer overruns, and other memory exploits, before they become security problems. The capabilities' bit structure comprises several fields, *e.g.,* an address field, which stores an address, *i.e.,* a pointer, and metadata, *i.e.,* bounds, permissions and other information associated with the address. In addition to the metadata, which can be arbitrarily modified by the operating system, every capability also has a hardware managed capability verification tag which indicates whether the capability is valid for use, primarily for memory dereferencing.

To prevent memory address corruption or exploit, CHERI has defined a limited set of specialized instructions that are allowed to manipulate the address field of a capability. The CHERI specifications may add more such instructions in the future, furthermore an end user can add self-defined instructions. Consequently, any instructions that is allowed to manipulate the address field of the capability is contemplated.

Based on the foregoing, before a capability retrieved from a register, whether formed initially upon a program reset or by an instruction, can be provided for use, *i.e.,* further processing or storage, a CHERI specification or a standard specifies that certain instructions using the capability may request that test(s) whether the capability was correctly formed and correctly retrieved, and is sealed, *i.e.,* not permitted to be modified by software, must be performed. Such test(s) may comprise, *e.g.,* whether bounds are malformed, whether reserved bits are set, whether the capability is sealed, and other such test(s) known to a person of ordinary skill in the art. Failure of any of the test(s) result in the capability verification tag, if previously set, being cleared. Regardless of whether the test(s) fail or succeed, the instruction may still proceed with manipulating the address of the capability. All the tests are computationally trivial.

The capability comprising an address (referred to as an old address), which is being manipulated by such instructions may be referred to as source capability, the capability comprising an address (referred to as a new address), resulting from such manipulation may be referred to as a destination address, when an absence of such modifier(s) could cause a confusion. When manipulating the address in the address field by any such instructions, it is necessary to test that the address field of the destination capability doesn't violate the rules of the source capability metadata, as a joint encoding scheme using the capability's metadata and address and is used to define the bounds and it is required by CHERI that the bounds decoded from the old and new addresses are identical for the manipulation to be valid.

As disclosed *supra,* one such test validates whether a new address is within the representable range. The metadata and the address field within the source capability define such a representable range comprising an upper and lower limit of addresses within the address field that can be represented without the destination capability becoming invalid. If the new address lies within the representable range, the destination capability is valid for use, for example the address can be dereferenced by an offset. If the new address falls outside the representable range, then the destination capability verification tag is cleared, and so the capability cannot be used.

An alternative to the representable range test is a bounds test. The metadata and the address within the source capability define two memory bounds, a base address bound and a top address bound. If the new address falls outside these memory bounds, then the destination capability verification tag is cleared, and so the capability cannot be used.

A CHERI specification may require a representable range test, bounds test, or a future release may add other tests to enforce the integrity of the capability's address. Consequently, a person of ordinary skill in the art will understand that the instant application uses the representable range test as an example and any test is thus contemplated.

As known to a person of ordinary skill in the art, the instructions allowed to manipulate the address field of a capability are applicable to any memory pointer, *e.g.,* a stack pointer, a pointer to a video frame buffer, a pointer to a Universal Asynchronous Receiver/Transmitter (UART), and any other memory pointers that the address field contains. Consequently, a person of ordinary skill in the art will understand the concept of the description using a CHERI Capability Stack Pointer (CSP) is used as an exemplary description, and is applicable to any such memory pointer.

Since all the instructions allowed to manipulate the address field of a capability carry similar functionality, *i.e.,* manipulating the address of the capability, followed by testing that the address doesn't violate the rules for the current capability metadata, *e.g.,* representable range, bounds verification, or other potential tests for integrity of the destination capability address, the following description uses a CHERI RISC-V CADDI instruction as a representative. Consequently, a person of ordinary skill in the art will understand the concept of the description is applicable to any of the instructions.

To avoid potential obfuscation of the problem by introducing unnecessary complexity, it is assumed for the remainder of this "Description of Related Technology" section that the source capability verification tag is set, the bounds are not malformed, no reserved bits are set, and the capability is unsealed.

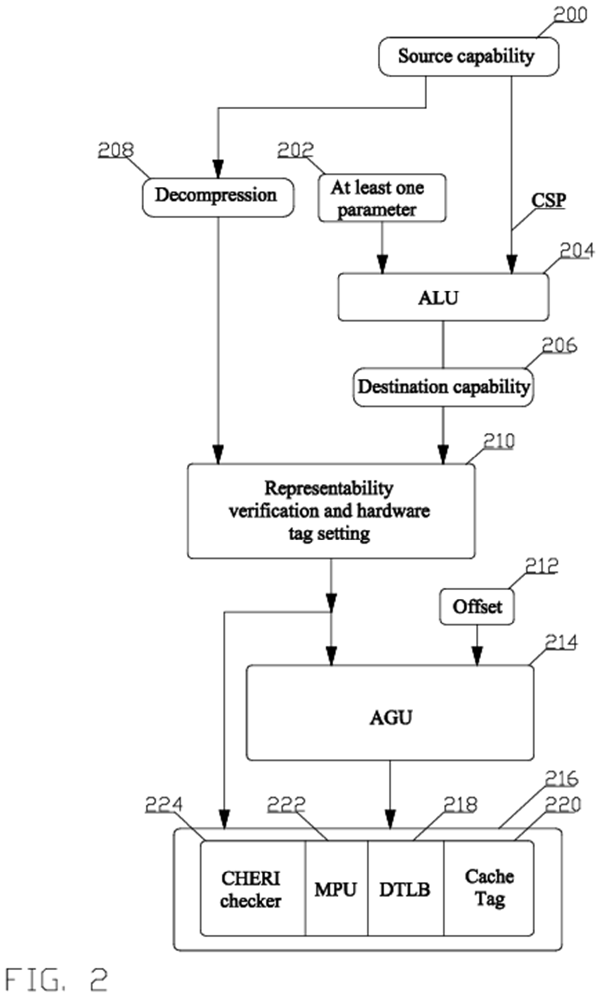

Referring to **FIG. 2****,** a program's CADDI instruction (not shown), being executed by a CPU (not shown), causes the CPU to fetch from a register a source capability **200,** an address field of which contains a stack pointer (CSP), *i.e.,* an address in a source capability, which is a pointer to the topmost element in the stack. The CSP comprises a physical address, should the operating system disable address translation, or a virtual address should the operating system enable address translation. Consequently, for the purpose of this application, the term effective address is used, and the specific modifier - physical or virtual is used if necessary. The CSP together with at least one parameter **202,** *i.e.,* value(s) by which to modify the CSP on stack frame allocation or deallocation provided by the currently executing program, are provided to the arithmetic logic unit (ALU) **204,** which performs an addition of the address of the source capability **200** and the at least one parameter **202,** yielding an address of a destination capability **206.** To verify that that the destination capability **206** was correctly formed, and is not sealed, the above-described tests are performed. Regarding specifically the representable range verification, the address of the destination capability **206** is within the representable range of the source capability **200,** the source capability **200** is decoded to calculate the representable range from the metadata field of the source capability in block **208.** The destination capability **206** and the source capability **200,** are provided for a verification to a representable permission block **210.**

The representable permission block **210** verifies whether the effective address of the destination capability **206** is within the representable range of the source capability **200.** Should the verification succeed, the capability verification tag is propagated, *i.e.,* the destination capability **206** includes the capability verification tag of the source capability **200.** Should any of the tests including the representable range verification fail, the capability verification tag is cleared, *i.e.,* the destination capability **206** includes a different capability verification tag than the source capability. A capability is (typically) considered to be a single datatype, *i.e.,* being jointly encoded wherein some bits of the address are used with the metadata to decode the address bounds. Therefore, the destination capability **206** cannot be forwarded from the representable permission block **210,** until the representable range verification has completed and, therefore, the capability verification tag value is known. The term forwarding a capability, known as forwarding a capability verification tag, is understood as making the capability with a verified capability verification tag available for use by another instruction which reads the capability as soon as possible, *e.g.,* before the capability is written back to a register.

The above-described operations of representable range verification test, as well as bounds verification, or other potential tests for integrity of the destination capability address as described *supra,* and hardware tag propagating or clearing may take time longer than a single clock cycle, thus requiring either reduction of the clock frequency of the central processing unit (CPU) to extend the clock cycle or an addition of an extra clock cycle before forwarding the destination capability. Consequently, this representable range verification, slows the basic operations of pointer increments and any subsequent CHERI instruction(s) using the result of the destination capability as an input. For the purpose of the following description, the load/store (L/S) instruction is used.

For consistency with the conceptual structure and information flow of **FIG. 1****,** consider that a second instruction (not shown), is a load/store (L/S) instruction. The L/S instruction takes as input the destination capability **206** provided by the representable permission block **210** and an offset **212** *i.e.,* a pointer specifying an offset between the destination capability address and the actual L/S address to access, the offset **212** being provided by the currently executing program or being encoded in the L/S instruction. The L/S instruction causes an address generation unit (AGU) **214** to calculate the L/S effective address from the address of the destination capability **206** and the offset **212.** In one aspect, the AGU **214** replaces the address in the destination capability **206** with the L/S effective address and provides the resulting destination capability **206** to a load/store unit (LSU) **216.** In another aspect, the AGU **214** provides the L/S effective address to the LSU **216.** The AGU **214** operation occurs in a single clock cycle.

The LSU **216** comprises a Data Translation Lookaside Buffer (DTLB) **218,** a cache tag (CT) **220** buffer with a structure as described *supra,* a memory protection unit (MPU) **222,** and a CHERI checker **224.** For any CPU, the MPU **222** comprises physical memory attributes (PMA) unit and a physical memory protection (PMP) unit. The PMA unit contains information of the physical memory/memories existing in the system, *e.g.,* cached memory, device memory, and other memories known to a person of ordinary skill in the art. The PMP unit, optional for the CHERI enabled CPU, defines a finite number of regions, which can be individually configured to enforce access permissions to a range of addresses of the physical memory in the system. The CHERI checker **224** performs checks on a capability, *e.g.,* whether the load/store effective address is in-bounds, the value of the capability verification tag, and other checks known to a person of ordinary skill in the art.

Upon receiving the destination capability **206** and the L/S effective address from the AGU **214,** the CHERI checker **224** performs a check of the destination capability verification tag, checks that all bytes of the access, wherein the lowest byte of the access comprises the L/S effective address, are within bounds of the destination capability **206,** and checks the destination capability **206** permissions. Should the capability verification tag be cleared, due to the failure of representability verification of the address of the source capability **200** during the execution of the CADDI instruction, the CHERI checker **224** aborts the processing of the other structures of the LSU **216** and generates an exception. Should the capability verification tag be set by the CADDI instruction, the CHERI checker **224** performs the remaining capability checks, and if any of them fail, the CHERI checker **224** aborts the processing of the other structures of the LSU **216** and generates an exception. The exception causes the CPU to jump to the exception handler and typically change privilege level. The exception handler performs a process specified by the CPU architecture for the specific instruction and exception type, *i.e.,* the L/S instruction as described and the reason being capability verification tag failure.

Should all the CHERI checker **224** checks succeed, the LSU **216** other structures perform their relevant checks and process the destination capability **206** according to the result of the checks as known to a person of ordinary skill in the art.

Since slowdown of basic operations of pointer increments and any consequent instructions, *e.g.,* the L/S instruction, has negative impact on the speed of the CHERI enabled CPU, there is a need in the art for an improved tag forwarding scheme for CHERI memory pointer increment.

Based on the foregoing, there is a need to provide a solution to the above identified problem of pointer increment slowdown, as well as additional advantages.

### SUMMARY

The invention is as defined in the claims.

In an aspect of the disclosure, an apparatus and a method for an efficient hardware tag forwarding for CHERI memory pointer increment according to appended independent claims is disclosed. Additional aspects are disclosed in the dependent claims.

According to a first aspect of the present invention, there is provided a method for an efficient capability verification tag forwarding for a Capability Hardware Enhanced RISC Instructions (CHERI) enabled Central Processing Unit, comprising: executing a first instruction manipulating an address of a source capability resulting in a destination capability in a first clock cycle; speculatively forwarding the capability verification tag of the destination capability in the first clock cycle; verifying an integrity of the destination capability's address in a second clock cycle; starting execution of a second instruction in the second clock cycle in parallel with the verifying; and reevaluating the status of the speculatively forwarded the capability verification tag in response to the verifying.

In an embodiment, the method further comprises: determining a status of the destination capability verification tag; and in response to the determining status being cleared: flushing an instruction pipeline; reloading the instruction pipeline with the second instruction and any additional subsequent instruction(s) already executed or in a process of being executed; and re-executing the second instruction and the any additional subsequent instruction(s).

In an embodiment, the method further comprises determining whether the second instruction reads the destination capability verification tag; and continuing processing the second instruction in response to the determining being negative.

In an embodiment, the method further comprises determining a status of the destination capability verification tag in response to the determining being positive; and continuing execution of the second instruction in response to the determining that the status is set.

In an embodiment, in response to the determining that the status is cleared: determining whether the second instruction reads the destination capability verification tag past the second cycle; and in response to the determining being negative: determining whether the second instruction can be modified to return a correct value in response to the determining that the status is cleared; modifying the second instruction in response to the determining that the second instruction can be modified; and continuing the execution of the modified second instruction.

In an embodiment, in response to the determining the status of the second instruction cannot be modified to return a correct value: flushing an instruction pipeline; reloading the instruction pipeline with the second instruction and any subsequent instruction(s) already executed or in a process of being executed; and re-executing the second instruction and the any subsequent instruction(s).

In an embodiment, in response to the determining that the subsequent instruction cannot be modified to return a correct value: determining that the second instruction is a memory accessing instruction; providing the destination capability verification tag to a CHERI checker at a load/store unit; and generating an exception.

In an embodiment, in response to the second instruction not reading the destination capability verification tag past the second cycle: determining a status of the reevaluating the destination capability verification tag; and continuing execution of the second instruction in response to the determined status.

In an embodiment, the method further comprises: testing the source capability for being sealed or corrupted; and clearing the capability verification tag of the source capability in response to the test being positive.

In an embodiment, in response to the test being positive: performing only the steps of executing an instruction manipulating an address of a source capability resulting in a destination capability in a first clock cycle; and forwarding the capability verification tag of the destination capability in the first clock cycle.

According to a second aspect of the present invention, there is provided an apparatus for an efficient capability verification tag forwarding for a Capability Hardware Enhanced RISC Instructions (CHERI) enabled Central Processing Unit, comprising: a Central Processing Unit configured to: execute a first instruction manipulating an address of a source capability resulting in a destination capability in a first clock cycle; speculatively forward the capability verification tag of the destination capability in the first clock cycle; verify an integrity of the destination capability's address in a second clock cycle; start execution of a second instruction in the second clock cycle in parallel with the verifying; and reevaluate the status of the speculatively forwarded the capability verification tag in response to the verifying.

In an embodiment, the Central Processing Unit is further configured to: determine a status of the destination capability verification tag; and in response to the determining status being cleared: flush an instruction pipeline; reload the instruction pipeline with the second instruction and any additional subsequent instruction(s) already executed or in a process of being executed; and re-execute the second instruction and the any additional subsequent instruction(s).

In an embodiment, the Central Processing Unit is further configured to: determine whether the second instruction reads the destination capability verification tag; and continue processing the second instruction in response to the determining being negative.

In an embodiment, the Central Processing Unit is further configured to: determine a status of the destination capability verification tag in response to the determining being positive; and continue execution of the second instruction in response to the determining that the status is set.

In an embodiment, in response to the determination that the status is cleared the Central Processing Unit is further configured to: determine whether the second instruction reads the destination capability verification tag past the second cycle; and in response the determining being negative: determine whether the second instruction can be modified to return a correct value in response to the determining that the status is cleared; modify the second instruction in response to the determining that the second instruction can be modified; and continue the execution of the modified second instruction.

In an embodiment, in response to the determining the status of the second instruction cannot be modified to return a correct value the Central Processing Unit is further configured to: flush an instruction pipeline; reload the instruction pipeline with the second instruction and any subsequent instruction(s) already executed or in a process of being executed; and re-execute the second instruction and the any subsequent instruction(s).

In an embodiment, in response to determining that the subsequent instruction cannot be modified to return a correct value the Central Processing Unit is further configured to: determine that the second instruction is a memory accessing instruction; provide the destination capability verification tag to a CHERI checker at a load/store unit; and generate an exception.

In an embodiment, in response that the second instruction does not read the destination capability verification tag past the second cycle the Central Processing Unit is further configured to: determine a status of the reevaluating the destination capability verification tag; and continue execution of the second instruction in response to the determined status.

In an embodiment, the Central Processing Unit is further configured to: test the source capability for being sealed or corrupted; and clear the capability verification tag of the source capability in response to the test being positive.

In an embodiment, in response to the test being positive the Central Processing Unit is further configured to: perform only the steps of execute a first instruction manipulating an address of a source capability resulting in a destination capability in a first clock cycle; and forward the capability verification tag of the destination capability in the first clock cycle.

### BRIEF DESCRIPTION OF THE DRAWINGS

The foregoing aspects described herein will become more readily apparent by reference to the following description when taken in conjunction with the accompanying drawings wherein:
**FIG. 1** depicts a conceptual structure and information flow among entities implementing memory pointer increment for a non-CHERI enabled CPU in accordance to prior art;
**FIG. 2** depicts a conceptual structure and information flow among entities implementing memory pointer incrementation for a CHERI enabled CPU in accordance with prior art; and
**FIG. 3** (comprising Figures 3A to 3D) depicts a conceptual structure and information flow among entities implementing memory pointer incrementation for a CHERI enabled CPU in accordance with an aspect of this disclosure.

### DETAILED DESCRIPTION

Unless otherwise defined, all terms (including technical and scientific terms) used herein have the same meaning as commonly understood by a person having ordinary skill in the art to which this invention belongs. It will be further understood that terms, such as those defined in commonly used dictionaries, should be interpreted as having a meaning that is consistent with their meaning in the context of the relevant art and this disclosure.

As used herein, the singular forms "a," "an," and "the" are intended to include the plural forms as well, unless the context clearly indicates otherwise. It will be further understood that the terms "comprise," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. The term "and/or" includes any and all combinations of one or more of the associated listed items.

Various disclosed aspects may be illustrated with reference to one or more exemplary configurations. As used herein, the term "exemplary" means "serving as an example, instance, or illustration," and should not necessarily be construed as preferred or advantageous over other configurations disclosed herein.

Various aspects of the present invention will be described herein with reference to drawings that are schematic illustrations of conceptual configurations of the present invention, unless explicitly noted. The various aspects of this disclosure are provided to enable a person having ordinary skill in the art to practice the present invention. Modifications to various aspects as presented throughout this disclosure will be readily apparent to a person having ordinary skill in the art, and the concepts disclosed herein may be extended to other applications.

Referring back to **FIG. 2****,** the inventor realized that with the exception of rare cases, *e.g.,* during debugging of program code, execution of an improperly debugged corner case or an edge case of some program code, or targeted exploit, the address in the address field of the destination capability to be forwarded from the ALU **204** for processing by a subsequent instruction, *e.g.,* the L/S instruction as shown, is within the representable range of addresses of the source capability, as verified by the representable permission block **210.** Therefore, the result of addition by the subsequent instruction, *e.g.,* the exemplary CADDI instruction as shown, can be provided immediately after completing the ALU's **204** calculation, *i.e.,* in a single clock cycle, and the representable permission verification of block **210** of **FIG. 2** can be postponed to the next clock cycle, thus not requiring either reduction of the clock frequency of the central processing unit (CPU) to extend the clock cycle or an addition of an extra clock cycle before forwarding the resulting capability. Such a forwarding is termed speculative forwarding, since the correct value of the capability verification tag is not known; it is speculated to be correct.

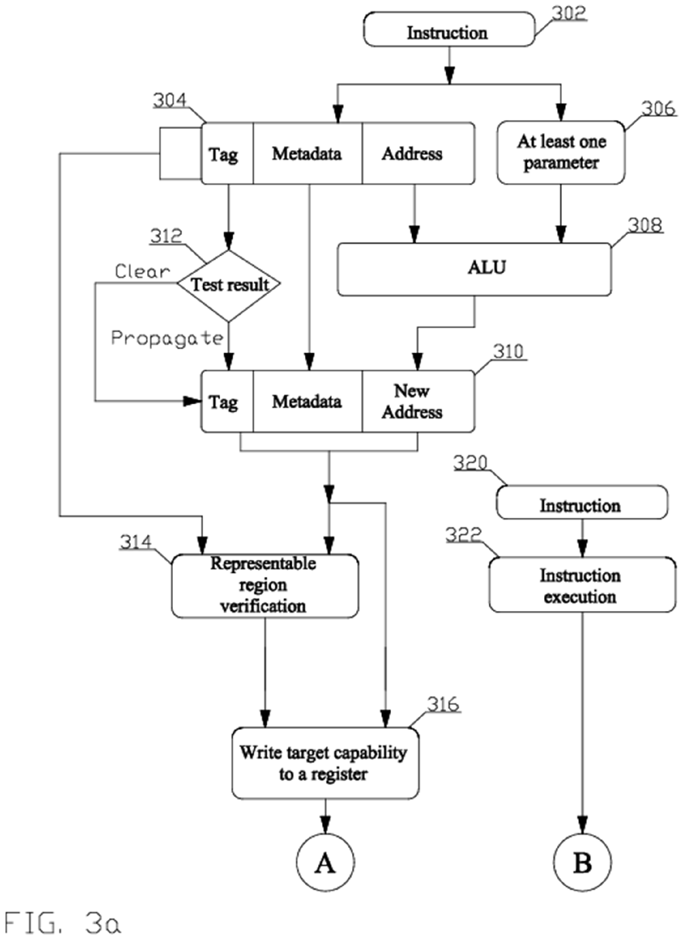

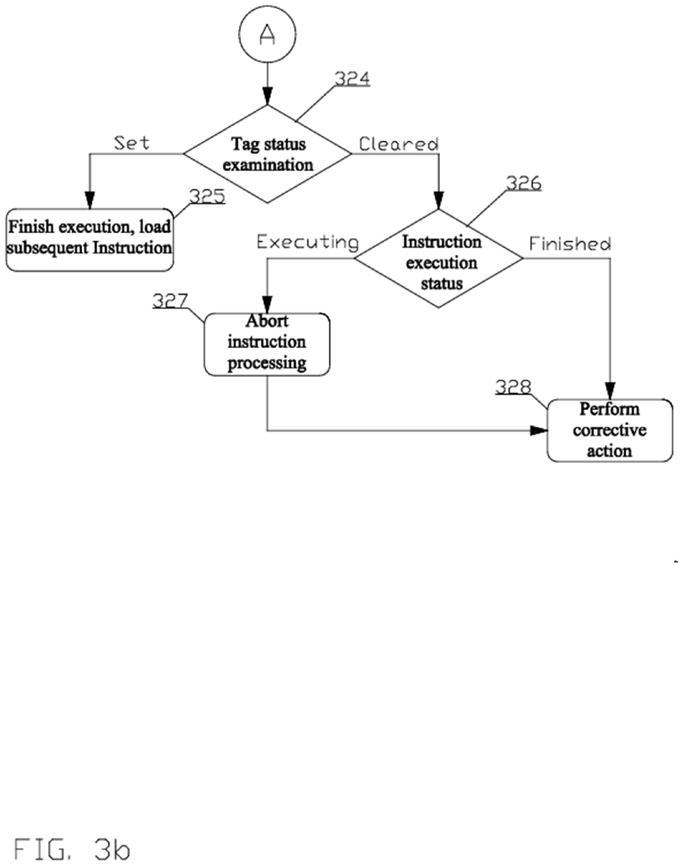

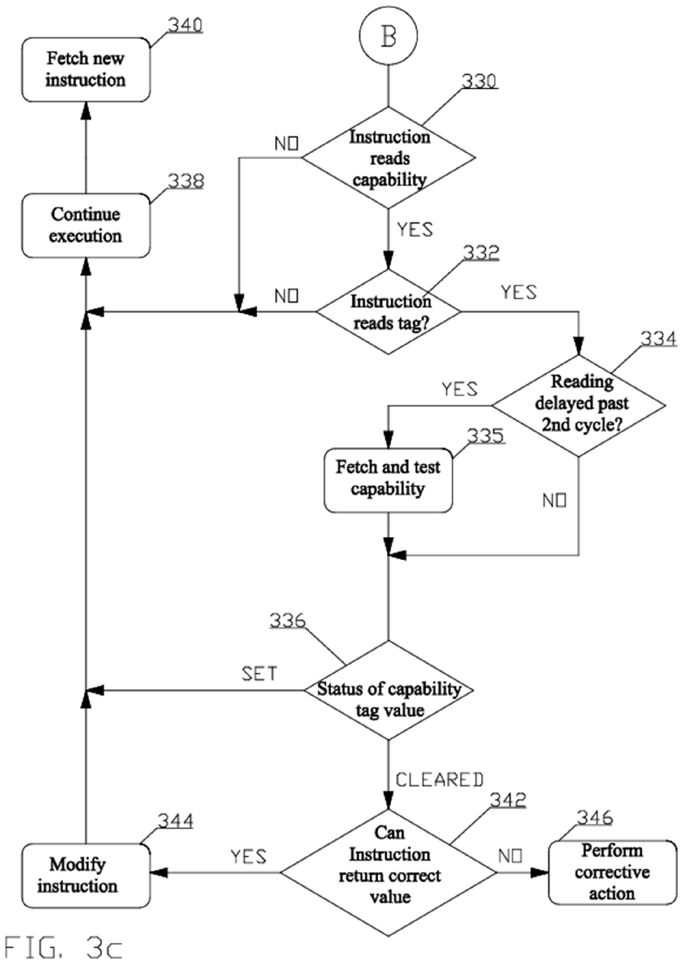

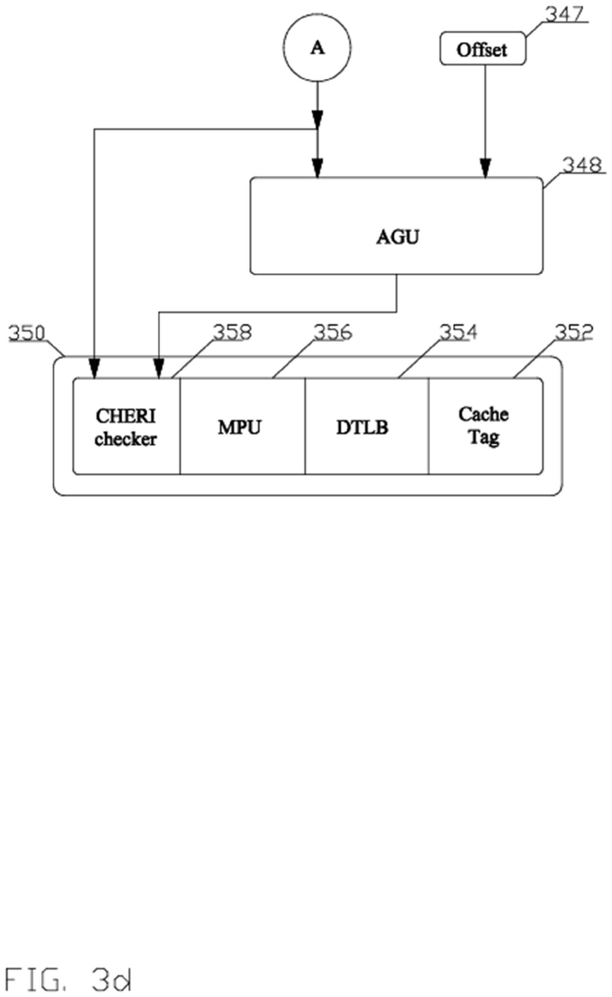

Such modification is disclosed in **FIG. 3** depicting a conceptual structure and information flow among elements of the conceptual structure implementing memory pointer incrementation for a CHERI enabled CPU in accordance with an aspect of this disclosure. The elements comprise hardware or software entities implementing the blocks and/or the block's functionality. Such a memory pointer incrementation is performed by one of the above-noted CHERI instructions that accepts a capability as one of its inputs and modifies the address of the capability while requiring the representable range verification.

Referring to **FIG. 3a****,** in a first clock cycle, a CHERI instruction **302** that accepts a capability as one of its inputs and modifies the address in the address field, that requires representable range verification, is fetched from a pipeline (not shown). The address of the capability contains a physical address, should the operating system disable address translation, or a virtual address should the operating system enable address translation. Consequently, for the purpose of this application, the term address is used, and the specific modifier - physical or virtual is used if necessary.

The CHERI instruction **302** accepts a source capability **304** to be used as one of its input parameters, together with at least one additional parameter **306.** The source capability **304** can be provided by the preceding instruction or fetched from a register. In the latter case, since it is possible that the source capability **304** is corrupted upon having been fetched from a register, the CADDI instruction requires that the source capability **304** is tested for being sealed against software modification or for a corruption, *e.g.,* whether bounds were malformed, any reserved metadata bits were set, *i.e.,* metadata bits that are reserved for future use and therefore must not be set. Therefore, source capability **304** is tested in block **312,** and in response to the test result indicating that the source capability **304** is not corrupted, and is not sealed, the source capability's **304** validity tag is propagated; in response to the test result indicating the capability's **304** corruption, or being sealed to prevent software modification, the source capability's **304** validity tag is cleared by a dedicated hardware or a software entity (not shown).

In one aspect of the invention, upon clearing the source capability's **304** validity tag, the processing continues by providing the source capability's **304** address and at least one additional parameter **306** to the ALU **308,** which calculates a new address. The new address, the metadata and the capability verification tag from the source capability **304** are provided to a destination capability **310,** upon completion of which the capability verification tag is forwarded. However, since the source capability **304** is corrupted or sealed, the representable range verification in block **314** is skipped. The capability **310** is written to the register **316** and forwarded to the instruction **320;** consequently, the processing of the forwarded capability **310** verification tag continues as described in **FIG. 3b** and associated text or **FIG. 3c** and associated text *infra.*

In another aspect of the invention, upon clearing the source capability's **304** verification tag, the processing continues in the same manner as if the test were not required and as such not performed. By providing the source capability's **304** address and at least one additional parameter **306** to the ALU **308,** which calculates a new address. The new address, the metadata and the capability verification tag from the source capability **304** are provided to a destination capability **310.** Although the status of the tag is known to be correct, since the processing continues in the same manner as the processing of the tag status, a correctness of which is not known, *i.e.,* in the case that the test for source capability **304** being corrupted, and is not sealed have not been required, such destination capability **310** is considered to be speculatively forwarded.

Since all the CHERI instructions that accept a capability as one of its inputs and modify the address in a manner requiring a representable range verification take less than or one clock cycle to perform the potentially required tests and the modification to the address, all these operations occur in the first clock cycle.

In the second clock cycle the execution of the CHERI instruction **302** continues by providing the source capability **304** and the speculatively forwarded destination capability **310** to a representable range verification block **314,** which verifies whether the new address of destination capability **310** is within the representable range defined by the metadata and the address of the source capability **304** or not. The verification occurs in the second clock cycle.

Upon finishing the verification, the representable range verification block **314** reevaluates the status of the speculatively forwarded capability verification tag. Should the verification succeed, the destination capability **310** including the speculatively forwarded capability verification tag, the new address, and the metadata, is written to the register in block **316.** The status of the capability verification tag may have been cleared regardless of whether the representable range verification is successful or fails due to the source capability **304** potential corruption, or being sealed against software modification, as described *supra.*

Should the verification fail, the representable range verification block **314** tests the status of the speculatively forwarded capability verification tag and in response to the status already being cleared, the destination capability **310** including the cleared speculatively forwarded capability verification tag, the new address, and the metadata is written to a register in block **316.** Otherwise in response to the status being set, representable range verification block **314** clears the speculatively forwarded capability verification tag and the destination capability **310** including the cleared speculatively forwarded capability verification tag, the new address, and the metadata is written to a register in block **316.** This reevaluation depends on the timing, it may occur in the second or later clock cycle.

In the same second clock cycle, in parallel with the verification processing in block **314,** an instruction **320** is fetched from the pipeline, and the instruction **320** execution begins in block **322.** The processing of the instruction **320,** may or may not be finished by the end of the second clock cycle, due to the fact that some instructions are multi-clock cycle instructions.

Postponing the verification of the address of the destination capability to the second clock cycle solves the pointer increment slowdown because the instruction **320** execution begins in the second clock cycle in block **322** without waiting for the result of the verification. The correct value of the speculatively forwarded capability verification tag may not be known at the time of the instruction **320** execution during the second clock cycle, except in cases when the capability verification tag was cleared due to the bounds being malformed, any reserved bits being set or the capability was sealed. Consequently, there are several possibilities regarding further processing.

Referring to **FIG. 3b****,** in one aspect of the invention, once the result of the representable range verification, indicated by the value of the capability verification tag, is known within the second clock cycle, the status of the capability verification tag is examined in block **324.**

As demonstrated *supra,* in most of the cases, the source capability **304** is not corrupted and the destination capability **310** succeeds the representable range verification indicated by the capability verification tag being set; consequently, the currently executing program execution continues in block **325,** either by continuing executing instruction **320,** in case the execution has not finished or the instruction **320** is a multi-clock cycle instruction, or by loading a subsequent instruction.

In the rare cases of the source capability **304** being corrupted, being sealed to prevent software modification and/or the destination capability **310** having failed the representable range verification indicated by the capability verification tag being cleared; thus, indicating a potential security problem with the currently executing program, the status of the execution of the instruction **320** is ascertained in block **326,** regardless of the type of the instruction **320,** or any subsequent instruction should the subsequent instruction execution also have started in the second cycle. Should the result of block **326** indicate that execution of the instruction **320** or any subsequent instruction is still in progress, block **327** aborts the execution of the second or subsequent instructions and the processing continues in block **328.**

Should the result of block **326** indicate that execution has finished, in an aspect of the invention for any instruction, since the source capability **304** and/or the destination capability **310** contains incorrect data as established by the capability verification tag being cleared, it is a general principle of processor design to perform a corrective action. Consequently, block **327** causes the pipeline to be flushed and reloaded with the instruction **320,** as well as any subsequent instruction(s) already executed or in a process of being executed, and re-execute these instructions. Since the capability verification tag associated with execution of the source instruction **302** and/or the destination instruction **310** has been cleared, re-execution of the instruction **320** and any subsequent instructions cause the re-executed instruction(s) to read the correct data, *i.e.,* the cleared capability verification tag value.

Alternatively, execution of an instruction depends on an occurrence of several events, *i.e*., type and characteristic of the instruction, timing of the representable range verification and subsequent verification of the speculatively forwarded capability verification tag *vis-a-vis* the execution of the instruction, and other events. Based on the type and characteristics of the instruction, there are three classes of instruction to consider.

The first class comprises instructions that read both a capability and the capability's verification tag. The term read is understood to mean to use a destination capability as at least one of the instruction's parameters, and to consider the capability's verification tag.

The second class comprises instructions that read a destination capability, but do not read, *i.e.,* require consideration of the destination capability's verification tag. By means of example, such instructions may, only inspect the address; use the address for a different purpose, *e.g.,* extract the base memory bound - an action that does not require a capability's verification tag consideration, *e.g.* the CHERI RISC-V instruction GCBASE, or assembling the capability and authorising the assembled capability by another capability, which may have larger bounds and/or permissions *e.g.* the CHERI RISC-V instruction CBLD. Such instructions may extract one or more field from the capability's metadata, such as permissions, *e.g.,* the CHERI RISC-V instruction GCPERM.

The third class comprises instructions that do not read a capability.

Furthermore, regardless of the class of an instruction, some instructions do not require testing whether the capability used as an input to the instruction was correctly formed and/or correctly retrieved from a register to be performed.

Referring to **FIG. 3c****,** these classes are considered. Consider an instruction **320,** an execution of which is subsequent to an execution of the instruction **310.** To distinguish among the different classes of instruction, decision block **330** evaluates whether the instruction **320** reads a capability. In response to a negative decision block **330,** the instruction **320** that does not read a capability and, consequently, does not need information about the validity of the capability's verification tag. Therefore, the execution continues in block **338** and the currently executing program continues by fetching the next instruction in the clock cycle following the end of the instruction **320** execution in block **340.**

In response to the positive decision in block **330,** block **332** evaluates whether the instruction **320** reads a capability verification tag. In response to a negative decision in block **332,** the value of the capability's verification tag is immaterial, and the execution continues in block **338** and the currently executing program continues by fetching the next instruction in the clock cycle following the end of the instruction **320** execution in block **340.**

In response to a positive decision in block **332,** block **334** determines whether the reading of the destination capability's **310** verification tag by instruction **320** is delayed from starting in the second cycle, because an instruction processing depends on the timing between the destination capability's **310** verification, which causes the subsequent reevaluation of the speculatively forwarded capability verification tag value, and the time when an instruction reads the destination capability's **310** verification tag. Consider that such an instruction comprises, *e.g.,* the instruction **320,** the execution of which is being delayed to a subsequent clock cycle, by, *e.g.,* a pipeline stall, the instruction's **320** cache miss, or other events known to a person of ordinary skill in the art. Alternatively, although the instruction **320** starts execution in the second clock cycle, the instruction **320** does not read the destination capability's **310** verification tag, however, a subsequent instruction does read the destination capability's **310** verification tag in the third or later cycle from the register **316.** Consequently, since the capability's verification tag status is known at the end of the second clock cycle, therefore, either the delayed instruction **320** or the subsequent instruction can be processed according to the reevaluated capability's verification tag status as disclosed *infra.*

In response to the determination in block **334** that the instruction **320** reads the destination capability's **310** verification tag in the second clock cycle, *i.e.,* the speculatively forwarded verification tag in parallel with the representable range verification and, furthermore, the speculatively forwarded tag of the destination capability **310** is provided to decision block **336.**

In response to the determination in block **336** that the speculatively forwarded capability verification tag was set, the execution of the instruction **320** continues in block **338,** and the currently executing program continues by fetching the next instruction in the clock cycle following the end of the instruction **320** execution, *cf.* block **340.**

In response to the determination in block **336** that the speculatively forwarded capability verification tag was cleared, the instruction **320** is examined to determine whether the instruction **320** can be modified to return a corrected value in block **342.** The term correct value is understood as modifying the instruction's return value regardless of the instruction's input parameters being correct or not. In response to the determination in block **342** being positive, it is possible to modify the result of the instruction **320** in block **344,** *e.g.,* by modifying the capability verification tag to the value determined by the representable range verification block **316** for GCTAG which returns an integer value representing the capability verification tag value, or for CADDI which returns a capability, which will have its capability verification tag cleared. The instruction is modified in block **344** and execution of the modified instruction **320** continues in blocks **338** and **340.** In response to the determination in block **342** being negative, the instruction **320** cannot be modified to return a correct value, and block **346** performs corrective action.

In one aspect of the invention, the block **346** performs corrective action by causing the pipeline to be flushed and reloaded with the instruction **320,** as well as any subsequent instructions, and re-execute these instructions as described in regards to block **327** *supra.*

In another aspect of the invention, applicable only to instructions accessing a memory, *e.g.,* an L/S instruction, an additional means of correcting the action exists, as depicted in **FIG. 3d****.** Such a memory accessing instruction takes as input the destination capability **310** *supra,* and an offset **347** between the destination capability **310** address and the actual load/store address to access. The offset **347** is provided by the currently executing program or is embedded in the instruction. The L/S instruction instructs an address generation unit (AGU) **348** to calculate the L/S effective address from the address of the destination capability and the offset **347.** In one aspect, the AGU **348** replaces the address in the destination capability with the load/store effective address and provides the destination capability **310** to the load/store unit (LSU) **350.** In another aspect, the AGU **348** provides the load/store effective address to the load/store unit (LSU) **350.** The AGU **348** operation occurs in a single clock cycle.

The LSU **350** comprises a Data Translation Lookaside Buffer (DTLB) **354,** a cache tag (CT) **352** buffer, a memory protection unit (MPU) **356;** the structures as described *supra* and a CHERI checker **358.** For the CHERI enabled CPU, the MPU **356** comprises physical memory attributes (PMA) unit and an optional physical memory protection (PMP) unit. The PMA unit contains information of the physical memory/memories existing in the system, *e.g.,* cached memory, device memory, and other memories known to a person of ordinary skill in the art. The PMP unit defines a finite number of regions, which can be individually configured to enforce access permissions to a range of addresses in the physical memory in the system. The CHERI checker **358** performs checks on a memory access by using a capability, *e.g.,* whether the load/store address is in-bounds, the value of the capability verification tag, and other checks known to a person of ordinary skill in the art.

Upon receiving both the destination capability **310** and the load/store effective address from the AGU **348,** *cf.* **FIG 3a****,** the CHERI checker **358** performs a check of the representable range verification indicated by the status of the capability verification tag. If the representable range verification failed, the CHERI checker **358** generates an exception, returning capability verification tag failure. The exception is processed by an exception handler at the CPU, which performs a process specified by the CPU architecture for the specific instruction and exception type, *i.e.,* the L/S instruction as described and a capability verification tag failure.

A person of ordinary skill in the art will understand that the LSU **350** as depicted and described is not the only implementation. By means of an example, if the address provided by the AGU **348** is a physical address, the translation by the DTLB **354** is unnecessary. In such cases either the DTLB **354** is not implemented, or the DTLB **354** is bypassed.

Should the capability verification tag be propagated, the LSU **350** processes the input parameters as described in the CHERI specification, and thus known to a person of ordinary skill in the art.

In response to the determination in block **334** that the instruction's **320** reading of the destination capability's **310** verification tag has been delayed to a third or later clock cycle, or that the execution did not start until a third or later clock cycle, since the representable range verification concluded and register **316** now contains the fully tested destination capability **310** including the reevaluated capability verification tag, the instruction **320** fetches the destination capability **310** from the register in block **316.** Should the instruction's **320** specification require testing to determine whether the destination capability **310** is corrupted or not as disclosed *supra,* such testing is performed by block **335.** The capability verification tag either propagated in case that all the tests succeed, or trivially cleared in case that at least one test fails, is provided to the decision block **336** and the instruction **320** execution continues according to the result of the decision in block **336** as described *supra.*

The various aspects of this disclosure are provided to enable a person having ordinary skill in the art to practice the present invention. Various modifications to these aspects will be readily apparent to persons of ordinary skill in the art, and the concepts disclosed therein may be applied to other aspects without departing from the spirit or scope of the invention. Thus, the present invention is not intended to be limited to the aspects shown herein but is to be accorded the widest scope consistent with the principles and novel features disclosed herein.

Therefore, by means of an example a person having ordinary skill in the art will understand, that the flow chart is not meant to be interpreted as an implementation, but rather at a level enabling explanation of the inventive concepts. Furthermore, certain steps may be added or be unnecessary and/or may be carried out in parallel based on a particular implementation. By means of an example, there is no need to test whether an instruction reads a capability, but rather only whether the instruction reads the capability's verification tag, the two decision blocks were shown to understand the different classes of instructions.

All structural and functional equivalents to the various illustrative logical blocks, modules, circuits, and algorithm steps described in connection with the various aspects described throughout this disclosure that are known or later come to be known to those of ordinary skill in the art are expressly incorporated herein by reference and are intended to be encompassed by the claims. Such illustrative logical blocks, modules, circuits, and algorithm steps may be implemented as electronic hardware, computer software, or combinations of both. That is, as described *supra,* since the CHERI extends the capability of the CPU, such extension is accomplished by adding dedicated hardware embodying the added CHERI functionality, *e.g.,* testing the source capability for being sealed or corrupted, forwarding the capability verification tag, and other such added CHERI functionality known to a person of ordinary skill in the art, together with both firmware and software support.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

## Claims

1. A method for an efficient capability verification tag forwarding for a Capability Hardware Enhanced RISC Instructions (CHERI) enabled Central Processing Unit, comprising:
executing a first instruction manipulating an address of a source capability resulting in a destination capability in a first clock cycle;
speculatively forwarding the capability verification tag of the destination capability in the first clock cycle;
verifying an integrity of the destination capability's address in a second clock cycle;
starting execution of a second instruction in the second clock cycle in parallel with the verifying; and
reevaluating the status of the speculatively forwarded the capability verification tag in response to the verifying.

2. The method as claimed in claim 1, further comprising:
determining a status of the destination capability verification tag; and
in response to the determining status being cleared:
flushing an instruction pipeline;
reloading the instruction pipeline with the second instruction and any additional subsequent instruction(s) already executed or in a process of being executed; and
re-executing the second instruction and the any additional subsequent instruction(s).

3. The method as claimed in claim 1 or 2, further comprising:
determining whether the second instruction reads the destination capability verification tag; and
continuing processing the second instruction in response to the determining being negative.

4. The method as claimed in claim 3, further comprising:
determining a status of the destination capability verification tag in response to the determining being positive; and
continuing execution of the second instruction in response to the determining that the status is set.

5. The method as claimed in claim 4, wherein in response to the determining that the status is cleared:
determining whether the second instruction reads the destination capability verification tag past the second cycle; and
in response to the determining being negative:
determining whether the second instruction can be modified to return a correct value in response to the determining that the status is cleared;
modifying the second instruction in response to the determining that the second instruction can be modified; and
continuing the execution of the modified second instruction.

6. The method as claimed in claim 5, wherein in response to the determining the status of the second instruction cannot be modified to return a correct value:
flushing an instruction pipeline;
reloading the instruction pipeline with the second instruction and any subsequent instruction(s) already executed or in a process of being executed; and
re-executing the second instruction and the any subsequent instruction(s).

7. The method as claimed in claim 5 or 6, wherein in response to the determining that the subsequent instruction cannot be modified to return a correct value:
determining that the second instruction is a memory accessing instruction;
providing the destination capability verification tag to a CHERI checker at a load/store unit; and
generating an exception.

8. The method of any of claims 5 to 7, wherein in response that the second instruction does not read the destination capability verification tag past the second cycle:
determining a status of the reevaluating the destination capability verification tag; and
continuing execution of the second instruction in response to the determined status.

9. The method as claimed in any of claims 1 to 8, further comprising:
testing the source capability for being sealed or corrupted; and
clearing the capability verification tag of the source capability in response to the test being positive.

10. The method as claimed in claim 9, wherein in response to the test being positive:
performing only the steps of executing an instruction manipulating an address of a source capability resulting in a destination capability in a first clock cycle; and
forwarding the capability verification tag of the destination capability in the first clock cycle.

11. An apparatus for an efficient capability verification tag forwarding for a Capability Hardware Enhanced RISC Instructions (CHERI) enabled Central Processing Unit, comprising:
a Central Processing Unit configured to execute or perform the steps of the method of any of claims 1 to 10.
